# EUROPÄISCHE PATENTSCHRIFT

(11) **EP 1 981 749 B1**
(45) Veröffentlichungstag und Bekanntmachung des Hinweises auf die Patenterteilung: **26.10.2011**
(21) Anmeldenummer: 07726216.0
(22) Anmeldetag: 22.01.2007
(51) Int. Cl.: B62D 25/08, B62D 27/06

(54) **KRAFTFAHRZEUGLÄNGSTRÄGER UND KRAFTFAHRZEUGFRONTEINHEIT**
MOTOR VEHICLE LONGITUDINAL BEAM AND MOTOR VEHICLE FRONT UNIT
LONGERON DE VÉHICULE AUTOMOBILE ET UNITÉ FRONTALE DE VÉHICULE AUTOMOBILE

(30) Priorität: 26.01.2006 DE 202006001307 U
(43) Veröffentlichungstag der Anmeldung: 22.10.2008
(73) Patentinhaber: Faurecia Kunststoffe Automobilsysteme GmbH, 85057 Ingolstadt (DE)
(72) Erfinder: JOLY-POTTUZ, Pascal, 85049 Ingolstadt (DE); MARY, Raphael, 85134 Stammham (DE)
(74) Vertreter: Richardt Patentanwälte
(86) Internationale Anmeldenummer: PCT/EP2007/050607
(87) Internationale Veröffentlichungsnummer: WO 2007/085582

(56) Entgegenhaltungen:
- EP-A2- 1 266 818
- WO-A-02/36414
- DE-A1- 10 105 562
- DE-A1- 10 308 002
- DE-A1- 10 317 226
- DE-A1- 19 813 162
- DE-C1- 19 611 934
- US-B1- 6 416 119

## Beschreibung

Die Erfindung betrifft einen Kraftfahrzeuglängsträger und eine Kraftfahrzeugfronteinheit.

Aus dem Stand der Technik sind verschiedene Fronteinheiten und Montageverfahren für Fronteinheiten bekannt.

Die EP 1 232 932 A1 zeigt einen Träger für die Fronteinheit eines Kraftfahrzeugs mit einem Trägerteil zur Verbindung mit den Kotflügeln und dem Fahrgestell des Kraftfahrzeugs (vgl. die Trägerteile 7 und 13 der Figuren 1 und 2 der EP 1 232 932 A1). An dem Trägerteil wird ein Fassungsteil zur Aufnahme einer Scheinwerfereinheit und zur Verbindung mit einem Stoßfänger befestigt (vgl. hierzu das Fassungsteil 43, die Scheinwerfereinheit 21, den Stoßfänger 19 und die Führung 45 zur Befestigung des Fassungsteils an dem Trägerteil, wie in den Figuren der EP 1 232 932 A1 dargestellt).

Bei dem aus der EP 1 232 932 A1 bekannten Stand der Technik tritt das Problem auf, dass aufgrund der relativ großen Maßtoleranzen des Rohbaus einer Kraftfahrzeugkarosserie, an der die Fronteinheit zu montieren ist, bei der Montage Passungsprobleme auftreten können. Hierdurch kann das sogenannte Fugenbild, insbesondere hinsichtlich der Fugen zwischen dem Stoßfänger und der Scheinwerfereinheit und zwischen der Scheinwerfereinheit und der Frontklappe, sowie zwischen dem Stoßfänger und der Frontklappe beeinträchtigt werden.

Weitere ähnliche Fronteinheiten sind aus der FR 2 809 061 und der DE 199 46 995 A1 bekannt geworden.

Ferner ist aus der DE 600 00 006 T2 ein Frontzusammenbau für ein Fahrzeug mit einer Tragstruktur und einem Scheinwerfer bekannt, wobei der Scheinwerfer an der Tragstruktur zwischen einer vormontierten und einer endmontierten Position um eine geneigte Achse drehbar befestigt ist.

Aus der EP 1 036 730 A2 ist ein Verfahren zur toleranzgenauen Montage von Bestandteilen eines Kraftfahrzeug-Vorderwagens bekannt. Hierbei kann eine Vielzahl von sich gegenseitig beeinflussenden Toleranzen berücksichtigt werden. Aus der DE 10317226 A1 ist ein kraftfahrzeuglängsträger nach dem Oberbegriff des Anspruchs 1 bekannt.

Demgegenüber liegt der Erfindung die Aufgabe zu Grunde einen verbesserten Kraftfahrzeuglängsträger und eine verbesserte Kraftfahrzeugfronteinheit zu schaffen.

Die der Erfindung zu Grunde liegenden Aufgaben werden mit den Merkmalen des unabhängigen Schutzanspruchs gelöst. Bevorzugte Ausführungsformen sind in den abhängigen Ansprüchen angegeben.

Die Erfindung ermöglicht eine endgültige Befestigung der Fronteinheit, d. h. eines sogenannten Frontendmoduls, an dem Rohbau eines Kraftfahrzeugs durch eine gemischte Verschraubung in Fahrzeug X- und Y-Richtung. Die Befestigung kann dabei durch das sogenannten Crashmanagement-System der Kraftfahrzeugfronteinheit erfolgen. Das Crashmanagement-System beinhaltet den Stoßfängerqüerträger und weitere z. B. energieabsorbierende Elemente.

Die vorliegende Erfindung ermöglicht eine Vereinfachung des Kraftfahrzeuglängsträgers sowie einer Gewichtsreduzierung, da die sonst üblichen Schottplatten an dem Kraftfahrzeuglängsträger eingespart werden können. Ferner ermöglicht die Erfindung eine Befestigung der kompletten Kraftfahrzeugfronteinheit, einschließlich des Stoßfängerüberzugs, an dem Rohbau des Fahrzeuges.

Ferner ermöglicht die Erfindung eine Befestigung in verschiedenen Fahrzeugrichtungen oder sie ermöglicht neue Montagezugänge. Insbesondere werden abnehmbare Stoßleisten am Stoßfängerüberzug nicht mehr benötigt.

Ein weiterer Vorteil ist, dass die Toleranzen des Crashmanagement-Systems und der Kraftfahrzeuglängsträger durch entsprechend große Befestigungslöcher, wie z. B. Langlöcher und/oder durch eine zumindest in Teilbereichen flexible Ausbildung des Flansches, ausgeglichen werden können.

Im weiteren werden Ausführungsformen der Erfindung mit Bezugnahme auf die Zeichnungen näher erläutert. Es zeigen:
- Figur 1: Eine schematische Draufsicht einer Ausführungsform erfindungsgemäßer Kraftfahrzeugslängsträger und einer erfindungsgemäßen Fronteinheit,
- Figur 2: Eine perspektivische Darstellung einer Ausführungsform eines erfindungsgemäßen Längsträgers,
- Figur3: Eine perspektivische Darstellung des Längsträgers der Fig. 2 mit einem daran montierten Flansch einer erfindungsgemäßen Kraftfahrzeugfronteinheit,
- Figur 4:: Eine Draufsicht auf die in der Figur 3 gezeigten Anordnung in X-Richtung

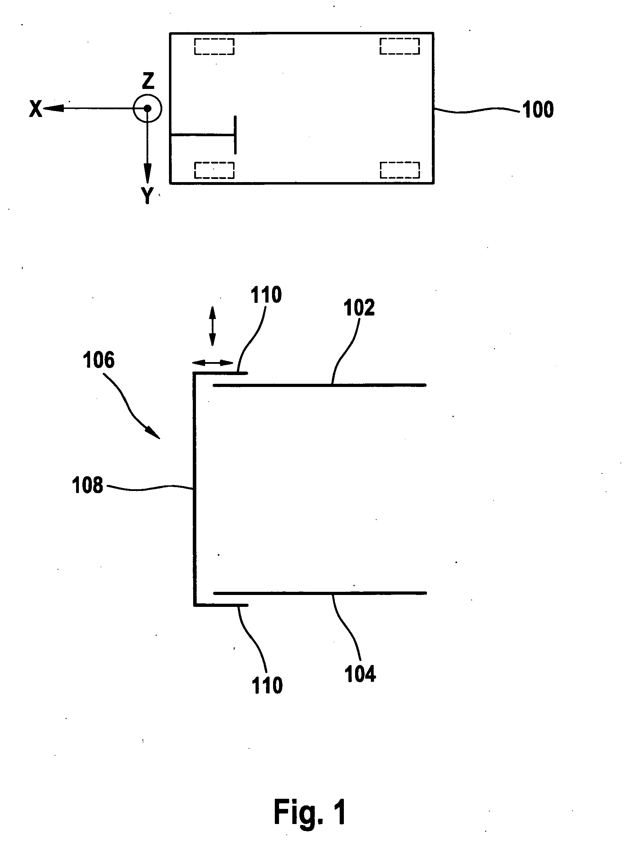

Die Figur 1 zeigt schematisch das Koordinatensystem eines Kraftfahrzeugs 100. Als X-Richtung wird hier die Fahrtrichtung des Kraftfahrzeuges bezeichnet, als Y-Richtung die senkrecht dazu stehende horizontale Richtung.

Die Figur 1 zeigt schematisch die Längsträger 102 und 104 des Kraftfahrzeugs 100. Die Längsträger 102, 104 dienen zur Aufnahme einer Fronteinheit 106. Die Fronteinheit 106 hat unter anderem ein sog. Crashmanagement-System, welches einen Stoßfängerquerträger 108 beinhaltet. An den beiden Enden des Stoßfängerquerträgers sind Flansche 110 angeordnet. Die Flansche 110 dienen zur Befestigung der Fronteinheit 106 an den Längsträgern 102, 104.

Die Flansche 110 und die Längsträger 102, 104 weisen jeweils Befestigungsmittel auf, die eine Befestigung der Fronteinheit 106 in X- und Y-Richtung zulassen, wobei gleichzeitig ein entsprechender Toleranzausgleich erfolgen kann. Die Flansche 110 bilden also die mechanische Schnittstelle zwischen der Fronteinheit 106 und den Längsträgern 102, 104.

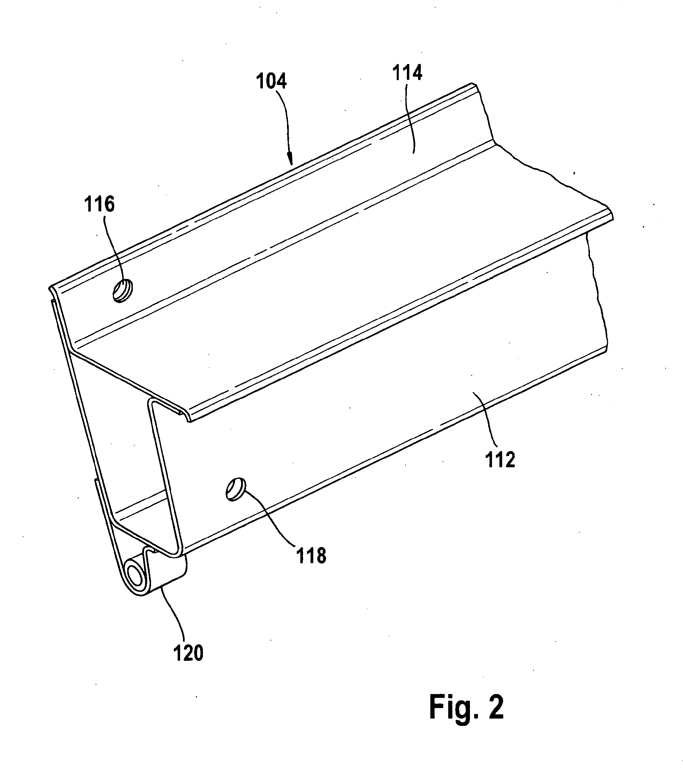

Die Figur 2 zeigt eine perspektivische Detailansicht des Längsträgers 104. Der Längsträger 104 hat eine C-förmige Schale 112, die nach oben von einem aufgeschweißten Blech 114 verschlossen wird. Die Schale 112 und das Blech 114 haben ein Befestigungsloch 116, das im Wesentlichen in Y-Richtung verläuft. Die Schale 112 hat ferner ein Befestigungsloch 118, welches ebenfalls im Wesentlichen in Y-Richtung verläuft.

An der Unterseite der Schale 112 ist ferner ein Befestigungsloch 120 angeordnet, welches im Wesentlichen in X-Richtung verläuft.

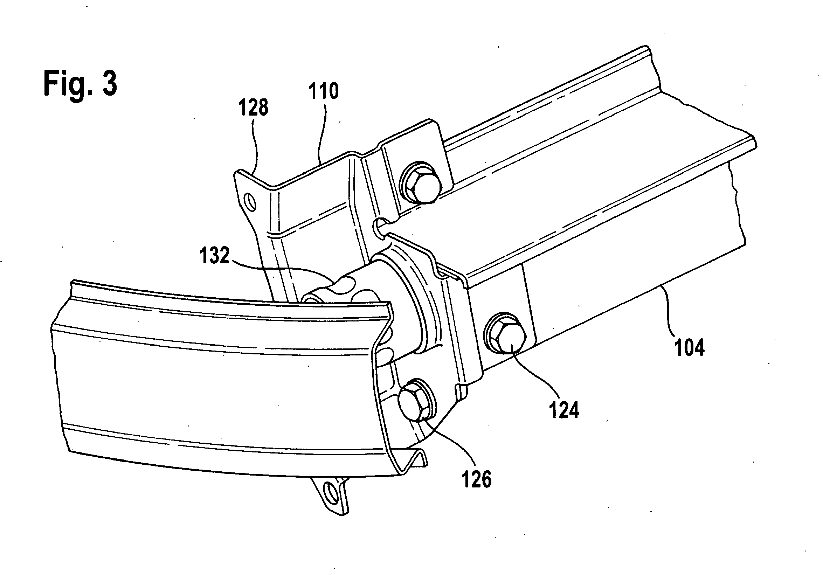

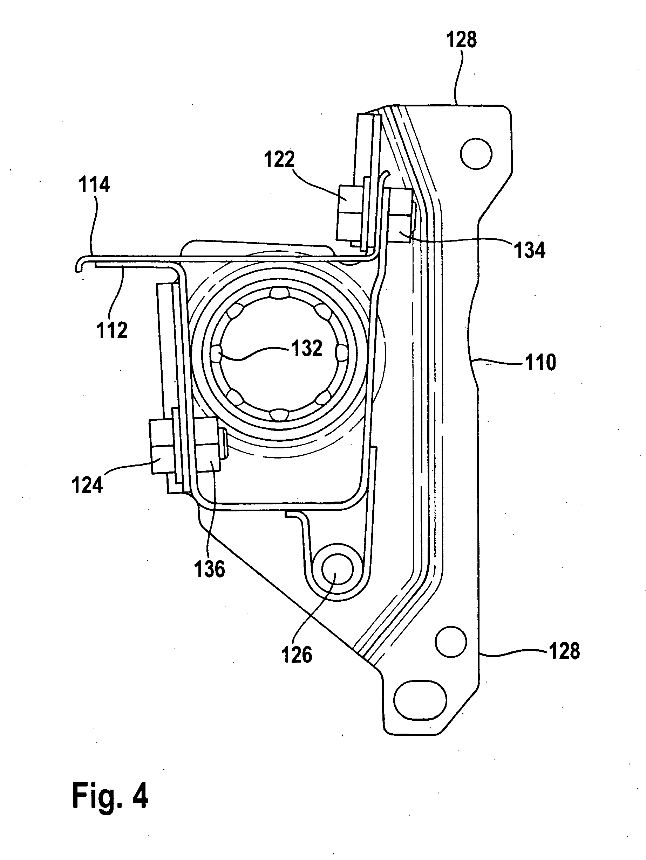

Im Inneren der Schale 112 ist ein Aufnahmebereich zur Aufnahme eines sog. Deformationselements ausgebildet, welches in den nachfolgenden Figuren 3 und 4 gezeigt ist.

Die Befestigungslöcher 116, 118 und 120 können zur Ausbildung von Schraubverbindungen zur Befestigung der Fronteinheit 106 ausgebildet sein. Hierzu können die Durchmesser der Befestigungslöcher 116, 118 und 120 so gewählt sein, dass ein Toleranzausgleich in X, Y und/oder Z-Richtung ermöglicht ist. Ferner können ein oder mehrere der Befestigungslöcher 116, 118 und 120 auch als Langlöcher ausgebildet sein.

Die Figur 3 zeigt den an dem Längsträger 104 angeschraubten Flansch 110. Der Flansch 110 ist mittels der Schrauben 122, 124, 126, die durch die Befestigungslöcher 116, 118 bzw. 120 verlaufen, an dem Längsträger 104 festgeschraubt. Der Flansch 110 hat flexible Befestigungslaschen 128, mit denen er an dem Stoßfängerquerträger 108 (vgl. Figur 1) befestigt ist. Beispielsweise ist der Flansch 110 an den Stoßfängerquerträger 108 geschweißt.

Die Figur 3 zeigt ferner eine Stoßleiste 130 der Fronteinheit 106.

Durch den Flansch 110 hindurch verläuft im Wesentlichen in X-Richtung ein Deformationselement 132, welches insbesondere zur Absorption von Stoßkräften bei einem Frontalaufprall dient.

Die Figur 4 zeigt diese Anordnung in X-Richtung. Insbesondere zeigt die Figur 4 die von den Schrauben 122, 124 mit entsprechenden Muttern 134 und 136 gebildeten Schraubverbindungen. Bei den Muttern 134, 136 kann es sich insbesondere um sog. Schweißmuttern handeln.

Der Flansch 110 hat ein Aufnahmeloch, durch das das Deformationselement 132 in den von der Schale 112 gebildeten Aufnahmebereich hereinragt. Bei einem Aufprall kann das Deformationselement 132 teleskopartig gestaucht werden.

### Bezugszeichenliste

- 100: Kraftfahrzeug
- 102: Längsträger
- 104: Längsträger
- 106: Fronteinheit
- 108: Stoßfängerquerträger
- 110: Flansch
- 112: Schale
- 114: Blech
- 116: Befestigungsloch
- 118: Befestigungsloch
- 120: Befestigungsloch
- 122: Schrauben
- 124: Schrauben
- 126: Schrauben
- 128: Befestigungslasche
- 130: Stoßleiste
- 132: Deformationselement
- 134: Mutter
- 136: Mutter

## Patentansprüche

1. Kraftfahrzeuglängsträger mit ersten (120) und zweiten (116, 118) Befestigungsmitteln für eine Fronteinheit (106), wobei die ersten Befestigungsmittel zur Befestigung der Fronteinheit in der Kraftfahrzeug X-Richtung und die zweiten Befestigungsmittel in der Kraftfahrzeug Y-Richtung ausgebildet sind, **dadurch gekennzeichnet, dass** der Längsträger eine C-förmige Schale (112) und ein die Öffnung der Schale abdeckendes Blech (114) aufweist, wobei die Schale und das Blech jeweils zumindest ein Befestigungsloch (116, 118, 120) aufweisen.

2. Kraftfahrzeuglängsträger nach Anspruch 1, wobei die ersten Befestigungsmittel in X-Richtung verlaufende Befestigungslöcher (120) und die zweiten Befestigungsmittel in Y-Richtung verlaufende Befestigungslöcher (116, 118) aufweisen.

3. Kraftfahrzeuglängsträger nach Anspruch 2, wobei die Befestigungslöcher für einen Toleranzausgleich als Langlöcher ausgebildet sind.

4. Kraftfahrzeuglängsträger nach Anspruch 3, wobei es sich bei den Befestigungslöchern um Langlöcher handelt.

5. Kraftfahrzeuglängsträger nach einem der vorhergehenden Ansprüche, wobei die Befestigungsmittel zur Ausbildung von Schraubverbindungen (122, 134; 124, 136; 126) für die Befestigung der Fronteinheit ausgebildet sind.

## Claims

1. Motor-vehicle longitudinal carrier having first (120) and second (116, 118) fastening means for a front unit (106), the first fastening means being configured for fastening the front unit in the motor-vehicle X-direction and the second fastening means being configured in the motor-vehicle Y-direction, **characterized in that** the longitudinal carrier has a C-shaped shell (112) and a plate (114) which covers the opening of the shell, the shell and the plate having in each case at least one fastening hole (116, 118, 120).

2. Motor-vehicle longitudinal carrier according to Claim 1, the first fastening means having fastening holes (120) which extend in the X-direction and the second fastening means having fastening holes (116, 118) which extend in the Y-direction.

3. Motor-vehicle longitudinal carrier according to Claim 2, the fastening holes being configured as slots for tolerance compensation.

4. Motor-vehicle longitudinal carrier according to Claim 3, the fastening holes being slots.

5. Motor-vehicle longitudinal carrier according to one of the preceding claims, the fastening means being configured for forming screw connections (122, 134; 124, 136; 126) for fastening the front unit.

## Revendications

1. Longeron de véhicule automobile comprenant des premiers (120) et deuxièmes (116, 118) moyens de fixation pour une unité avant (106), les premiers moyens de fixation étant réalisés pour la fixation de l'unité avant dans la direction X du véhicule automobile, et les deuxièmes moyens de fixation étant réalisés pour la fixation de l'unité avant dans la direction Y du véhicule automobile, **caractérisé en ce que** le longeron présente une coque en forme de C (112) et une tôle (114) recouvrant l'ouverture de la coque, la coque et la tôle présentant à chaque fois au moins un trou de fixation (116, 118, 120).

2. Longeron de véhicule automobile selon la revendication 1, dans lequel les premiers moyens de fixation présentent des trous de fixation (120) s'étendant dans la direction X et les deuxièmes moyens de fixation présentent des trous de fixation (116, 118) s'étendant dans la direction Y.

3. Longeron de véhicule automobile selon la revendication 2, dans lequel les trous de fixation sont réalisés sous forme de trous oblongs pour une compensation des tolérances.

4. Longeron de véhicule automobile selon la revendication 3, dans lequel les trous de fixation sont des trous oblongs.

5. Longeron de véhicule automobile selon l'une quelconque des revendications précédentes, dans lequel les moyens de fixation sont réalisés pour la réalisation de connexions vissées (122, 134 ; 124, 136 ; 126) pour la fixation de l'unité avant.
